# EUROPÄISCHE PATENTSCHRIFT

(11) **EP 2 407 430 B1**
(45) Veröffentlichungstag und Bekanntmachung des Hinweises auf die Patenterteilung: **26.02.2020**
(21) Anmeldenummer: 11005749.4
(22) Anmeldetag: 14.07.2011
(51) Int. Cl.: C02F 1/28

(54) **FILTERKARTUSCHE SOWIE VERFAHREN ZUR FILTRATION VON WASSER**
FILTER CARTRIDGE AND METHOD FOR FILTERING WATER
CARTOUCHE DE FILTRE ET PROCÉDÉ DE FILTRATION D'EAU

(30) Priorität: 15.07.2010 DE 102010027396
(43) Veröffentlichungstag der Anmeldung: 18.01.2012
(73) Patentinhaber: BWT water+more GmbH, 5310 Mondsee (AT)
(72) Erfinder: Pichler, Markus, 5020 Salzburg (AT); Ehgartner, Christian, 5340 St. Gilgen (AT); Schöppl, Alexander, 5310 Mondsee (AT)
(74) Vertreter: Friderichs, Gunther

(56) Entgegenhaltungen:
- EP-A1- 0 823 276
- EP-A2- 0 365 887
- DE-A1-102005 062 855
- US-B1- 6 638 426

## Beschreibung

### Gebiet der Erfindung

Die Erfindung betrifft eine Filterkartusche, insbesondere für schwerkraftbetriebene Wasserfiltersysteme für den Haushalt, sowie ein Verfahren zur Filtration von Trinkwasser.

### Hintergrund der Erfindung

Filtersysteme zur Filtration von Trinkwasser zum Gebrauch im Haushalt sind bekannt. Es handelt sich dabei in der Regel um Kartuschen, welche mit einem Filtergranulat gefüllt sind. Das zu filternde Wasser tritt über Einlauföffnungen in die Filterkartusche ein, durchläuft das Filtergranulat und verläßt über eine in der Regel siebartig ausgestaltete Auslassöffnung die Filterkartusche. In der Regel dienen derartige Filterkartuschen der Enthärtung des Trinkwassers, aber auch Schwermetalle und Bakterien können bei Verwendung eines geeigneten Filtergranulats entfernt werden.

Das Filtergranulat liegt in der Regel lose in der Kartusche, wodurch es erforderlich ist, die Kartusche im Einlauf- und Auslaufbereich mit einem geeigneten Filtermaterial, welches zwar für Wasser durchlässig ist, aber das Granulat zurückhält, zu verschließen. Aus der Praxis bekannt hierfür sind beispielweise Vliese. Weiter bekannt sind siebartige Flächengebilde mit mikrostrukturierten Öffnungen. Derartige Flächengebilde sind in der Regel aufwendig herzustellen.

Die Anforderungen das Filtermaterial zum Zurückhalten des Granulats sind hoch. So muss zum einen das Granulat sicher zurück gehalten werden, damit dieses nicht aus der Kartusche rieselt. Zum anderen darf durch das verwendete Material der Durchfluss nicht wesentlich erschwert werden. Problematisch ist dabei insbesondere, dass nicht nur Wasser von oben nach unten läuft, sondern dass in der Regel auch Gase, insbesondere Luft, nach oben aufsteigen. Bei derartigen Gasen kann es sich beispielsweise um Luft handeln, welche im Granulat eingeschlossen war. Aber auch im zu filternden Wasser gelöste Gase, wie beispielsweise Kohlendioxid, können Blasen verursachen. Die verwendeten Flächengebilde zur Zurückhaltung des Filtergranulats neigen oft dazu, dass aufgrund einer Benetzung mit Wasser eine Luftdurchlässigkeit nicht mehr sicher gestellt ist. In der Folge sammelt sich Luft im oberen Bereich der Kartusche, wodurch wiederum Wasser zurückgehalten wird und der Durchfluß verlangsamt wird oder sogar zum Stehen kommt.

Zur Behebung dieses Problems schlägt die Europäische Patentschrift EP 1 230 166 B1 ein nach oben gewölbtes Netz unterhalb des eigentlichen Deckels der Kartusche vor. Aufgrund der Wölbung nach oben soll der Durchfluß verbessert werden. In der Praxis hat sich aber gezeigt, dass in vielen Fällen ein nach oben gewölbtes Flächengebilde für den Durchfluß sogar nachteilig ist, da sich auf einem Gebilde, welches mit dem Filtergranulat keinen Kontakt hat, ein geschlossener Wasserfilm bildet, welcher als Barriere für aufsteigende Luftblasen wirkt. Es ist daher zur Sicherstellung eines hinreichenden Durchflusses besser, dass das Flächengebilde auf dem Filtergranulat aufliegt. Dies kann in Folge größerer aufsteigender Luftblasen zumindest bei der Erstverwendung der Filterkartusche aber nicht immer sicher gestellt werden.

Das Dokument (US 6638426 B1) zeigt einen Filter mit einem Luftsiphon.

### Aufgabe der Erfindung

Der Erfindung liegt demgegenüber die Aufgabe zu Grunde, die Gefahr von verschlechtertem Durchfluß aufgrund aufsteigender Gasblasen zu reduzieren.

Eine weitere Aufgabe der Erfindung ist es, eine Entlüftung bereit zu stellen, welche das Filtergranulat sicher zurückhält und bei welcher auf den Einsatz teuerer mikrostrukturierter Flächengebilde mit einem großen offenen Querschnitt verzichtet werden kann.

### Zusammenfassung der Erfindung

Die Aufgabe der Erfindung wird bereits durch eine Filterkartusche zur Filtration von Wasser nach Anspruch 1 gelöst.

Bevorzugte Ausführungsformen und Weiterbildungen der Erfindung sind den Unteransprüchen zu entnehmen.

Die Erfindung betrifft eine Filterkartusche, welche insbesondere für ein schwerkraftbetriebenes System zur Filterung von Trinkwasser im Haushalt vorgesehen ist. Derartige Systeme bestehen in der Regel aus einem Trichter, in welchem die Kartusche eingesetzt wird und einem Auffangbehälter, mit welchem das von der Kartusche gefilterte Wasser aufgefangen wird.

Die Kartusche umfasst ein Oberteil mit zumindest einer Einlauföffnung und ein Unterteil mit zumindest einer Auslauföffnung.

In der Regel werden Oberteil und Unterteil als getrennte Bauteile bereit gestellt, wobei zunächst das Filtergranulat in das Unterteil eingefüllt wird und sodann das Oberteil als Deckel auf dem Unterteil befestigt wird. Dieses kann beispielsweise geklemmt, verschweißt oder verklebt werden. Im Sinne der Erfindung ist aber auch eine einstückige Ausgestaltung von Oberteil und Unterteil denkbar. Es ist ferner denkbar, dass der Einlauf sich unterhalb des eigentlichen Deckels befindet, mithin kann sich im Sinne der Erfindung definitionsgemäß das Oberteil auch auf den unteren Teil der Kartusche erstrecken. Die Begriffe "Oberteil" und "Unterteil" dienen somit in erster Linie der Definition, dass ein erster Bereich mit einer Einlauföffnung und ein zweiter, darunter liegender Bereich mit einer Auslauföffnung vorhanden sind.

Gemäß der Erfindung weist das Oberteil zumindest eine Entlüftungsöffnung auf, welche unterhalb einer geschlossenen Mantelfläche eines in der Filterkartusche angeordneten Einsatzes angeordnet ist, wobei das Oberteil oberhalb der Entlüftungsöffnung geschlossen ist.

Durch diese Anordnung wird ein Luftsiphon bereit gestellt, welcher sicherstellt, dass im ordnungsgemäßen Betrieb der Kartusche das obere Ende des Einsatzes nicht im Wasser steht. So wird die Bildung einer geschlossenen Wasserhaut auf einer Filterschicht zur Rückhaltung des Filtergranulats verhindert und ein sicherer Durchfluß der Kartusche sichergestellt, da Gasblasen zunächst innerhalb des Einsatzes mit geschlossener Mantelfläche aufsteigen und innerhalb des Einsatzes die Wasseroberfläche verlassen und sodann quasi im Trockenen die Schicht zur Zurückhaltung des Filtergranulats passieren und aus der Kartusche austreten können.

Eine unterhalb der Entlüftungsöffnung angeordnete Einlauföffnung, beziehungsweise mehrere Einlauföffnungen, stehen während des Filtervorgangs dagegen in der Regel nur mit Wasser in Kontakt, so dass es bei einer ein der Nähe der Einlauföffnung angeordneten Filterstruktur zur Zurückhaltung des Filtergranulats nicht zu der beschriebenen Filmbildung kommt.

Der Einsatz besteht gemäß der Erfindung aus einem röhrenförmigen Abschnitt, welcher oben mit einer Filterstruktur versehen ist. Unter Oben und Unten im Sinne der Erfindung wird die Position verstanden, welche die Filterkartusche beim bestimmungsgemäßen Verbrauch in Verbindung mit einem schwerkraftbetriebenen Filtersystem hat.

Bei einer bevorzugten Ausführungsform der Erfindung ist der Einsatz selbst mit einer Filterstruktur, insbesondere mit einem Gitter oder einem textilen Flächengebilde wie einem Gewebe, Netz oder Vlies verschlossen. Unter einer Filterstruktur wird also jedes Flächengebilde verstanden, welches für Luft und Wasser durchlässig ist.

Der Einsatz kann alle denkbaren geometrischen Formen annehmen, insbesondere kann der röhrenförmige Teil zylinder-, insbesondere kreiszylinder- oder kegelstumpfförmig ausgebildet sein. Aber auch andere geometrische Formen zur Ausbildung einer Röhre sind denkbar.

Bei einer bevorzugten Ausführungsform der Erfindung bildet der Einsatz mit der Filterstruktur ein einstückiges Bauteil, insbesondere aus Spritzguß. Durch die Erfindung wird insbesondere ermöglicht, auf relativ teure Materialien mit Mikrostrukturierungen, die einen großen offenen Querschnitt sicherstellen, verzichtet werden. Vielmehr kann die Gitterstruktur beispielsweise durch ein Spritzgussverfahren gebildet werden, ohne dass es zu den beschriebenen Durchflussverringerungen kommt.

Bei einer bevorzugten Ausführungsform der Erfindung weist der Einsatz auf der der Filterstruktur gegenüber liegenden Seite einen Kragen mit einer weiteren Filterstruktur auf.

Diese weitere Filterstruktur liegt unterhalb der zumindest einen Einlauföffnung und dient ebenfalls dem Zurückhalten des Filtergranulats, mit welchem die Filterkartusche gefüllt ist. Der Kragen ist vorzugsweise ebenfalls mit dem restlichen Einsatz einstückig ausgebildet.

Vorzugsweise ist der Kragen kegelförmig ausgebildet und verläuft schräg nach oben in Richtung der geschlossenen Mantelfläche, so dass möglicherweise unterhalb des Kragens entstehende Gasblasen sich nicht am Kragen sammeln, sondern in den röhrenförmigen Abschnitt mit geschlossener Mantelfläche aufsteigen.

Dabei ist die zumindest eine Einlauföffnung oberhalb der weiteren Filterstruktur angeordnet.

Einlauföffnung und Entlüftungsöffnung sind, jeweils gemessen von einem oberen Ende der Entlüftungsöffnung bis zu einem unteren Ende der Einlauföffnung, in einer bevorzugten Ausführungsform der Erfindung zumindest 0,3 cm, besonders bevorzugt mindestens 1 cm voneinander beabstandet. So wird eine hinreichen lange Strecke für den Luftsiphon bereit gestellt. Auch wenn es beispielsweise im Betrieb, beispielsweise aufgrund einer Bewegung des Filtersystem durch den Nutzer, zu Erschütterungen kommt, dringt das Wasser nicht in den oberen wasserfreien Bereich der Filterkartusche ein.

Die zumindest eine Entlüftungsöffnung ist bei einer bevorzugten Ausführungsform der Erfindung zumindest 0,2 cm, vorzugsweise mindestens 0,5 cm unterhalb eines oberen Endes der geschlossenen Mantelfläche des Einsatzes angeordnet und/oder ist zumindest 0,2 cm, vorzugsweise mindestens 0,5 cm oberhalb eines unteren Endes der geschlossenen Manteldecke des Einsatzes angeordnet. So liegt die Entlüftungsöffnung vorzugsweise im Wesentlichen mittig im Verhältnis zum oberen und unteren Ende der geschlossenen Mantelfläche des röhrenförmigen Abschnitts.

Bei einer bevorzugten Ausführungsform der Erfindung weist die Filterkartusche eine Luftaustrittsöffnung und eine, vorzugsweise zumindest zwei oder drei Einlauföffnungen auf. So erfolgt über eine Luftaustrittsöffnung ein definierter, optisch gut wahrnehmbarer Luftaustritt und das Wasser kann gut über mehrere Einlauföffnungen eintreten.

Bei einer alternativen Ausführungsform der Erfindung ist auch denkbar, Einlauf- und Luftaustrittsöffnung ineinander übergehen zu lassen, etwa in Form zumindest eines Schlitzes, welcher sich beispielsweise vertikal über das Oberteil der Filterkartusche erstreckt. Im Sinne der Erfindung wird dieser Schlitz also sowohl als Einlauf- als auch als Entlüftungsöffnung verstanden.

Zumindest die Luftaustrittsöffnung ist bei einer bevorzugten Ausführungsform der Erfindung ohne Gitterstruktur ausgebildet oder weist nur eine grobmaschige Gitterstruktur mit Öffnungen von mindestens 0,5 mm³ auf. So wird sichergestellt, dass sich auf der Entlüftungsöffnung kein Wasserfilm bildet, der das Austreten von Gasblasen behindert.

Die Filterkartusche ist mit einem Granulat gefüllt und auch die Auslaßöffnung ist vorzugsweise als Filterstruktur für das Granulat ausgebildet. Dabei kann wiederum die Filterstruktur durch ein im Spritzgußverfahren erzeugtes Netz der Auslauföffnung gebildet sein und/oder durch einen netzartigen oder textilen Einsatz.

Die Erfindung kann sich insbesondere auf eine Filterkartusche beziehen, welche ein Oberteil mit einer Einlauföffnung und eine Entlüftungsöffnung sowie ein Unterteil mit einer Auslauföffnung ausweist, wobei die Entlüftungsöffnung über einen Luftsiphon mit einem Innenraum der Filterkartusche verbunden ist. Unter einem Luftsiphon wird eine Anordnung verstanden, bei welcher aufströmende Gase oder Luft einen Bereich passieren, welcher unterhalb der Oberfläche der Wassersäule des einlaufenden Wassers steht und frei von Wasser ist und sodann umgelenkt uns ins Wasser geleitet werden. Ein solcher Siphon kann beispielsweise als Flaschensiphon ausgebildet sein, bei welchem sich ein röhrenförmiger Einsatz in einer oben geschlossenen Flasche beziehungsweise einem Becher befindet.

Durch den Luftsiphon kann eine Filterstruktur zum Rückhalten des Filtergranulats in einem oberen Bereich der Filterkartusche angeordnet werden, welcher bei bestimmungsgemäßem Gebrauch der Filterkartusche nicht vom Wasser geflutet wird, da das Oberteil beziehungsweise der Deckel der Kartusche oberhalb der Filterstruktur geschlossen ist und sich somit wie eine Glocke über die Filterstruktur erstreckt.

Die Erfindung betrifft des Weiteren ein Verfahren zur Filtration von Wasser mittels einer vorstehend beschriebenen Filterkartusche.

Das Wasser läuft dabei durch eine Einlauföffnung einer Filterkartusche, welche in einem Trichter eines Filtersystems, welches insbesondere im Haushalt verwendet wird, sitzt.

Das Wasser durchläuft ein Filtergranulat und tritt an einem unteren Ende der Filterkartusche aus, so dass es in einen Auffangbehälter, wie beispielsweise eine Kanne, läuft.

Gemäß der Erfindung werden austretende Gase, insbesondere Luft, über einen Einsatz mit einer geschlossenen Mantelfläche, durch eine Filterstruktur hindurch in ein Oberteil der Kartusche geleitet und über zumindest unter der Filterstruktur angeordnete Entlüftungsöffnung aus der Filterkartusche ausgeleitet.

Die Filterstruktur, welche zum Rückhalten des Filtergranulats vorgesehen ist, befindet sich so in einem Bereich, welcher beim bestimmungsgemäßen Gebrauch, nicht unter Wasser steht.

### Kurzbeschreibung der Zeichnungen

Die Erfindung soll im Folgenden anhand eines schematisch dargestellten Ausführungsbeispiels bezugnehmend auf die Zeichnungen Fig. 1 bis Fig. 4 näher erläutert werden.
- Fig. 1: zeigt eine schematische, perspektivische Ansicht einer Filterkartusche
- Fig. 2: zeigt eine weitere Ansicht der Filterkartusche von unten
- Fig. 3: zeigt eine Schnittansicht des Oberteils einer Filterkartusche
- Fig. 4: zeigt eine perspektivische Ansicht des Oberteils einer Filterkartusche

### Detaillierte Beschreibung der Zeichnungen

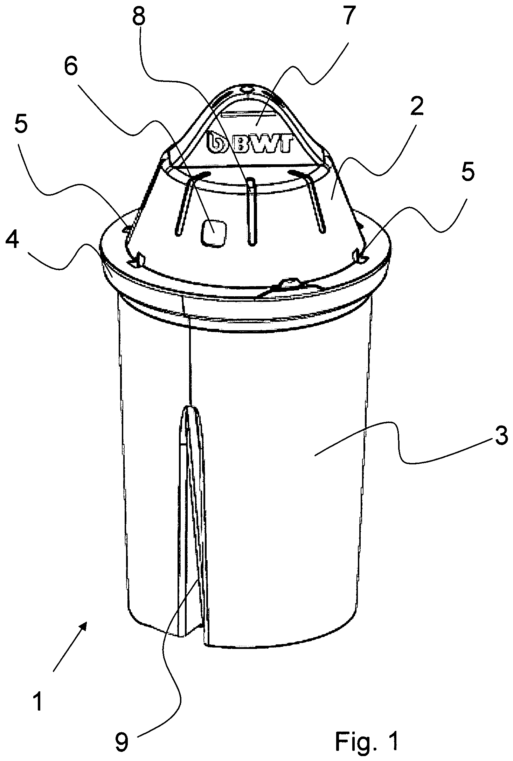

Fig. 1 zeigt eine perspektivische Ansicht einer Filterkartusche 1. Eine derartige Filterkartusche 1 wird in der Regel für Trinkwasserfilter für Haushaltszwecke verwendet.

Die Filterkartusche 1 umfaßt ein Oberteil 2 sowie ein Unterteil 3. Bei der Herstellung der Filterkartusche 1 wird das Filtergranulat (nicht dargestellt) in der Regel in das becherförmig ausgebildete Unterteil 3 gefüllt und sodann das Oberteil 2 auf dem Unterteil 3 befestigt, beispielsweise angeschweißt, angeklebt oder aufgeclipst.

Das Oberteil 2 der Filterkartusche 1 umfaßt einen Griff 7 zum Einsetzen der Filterkartusche 1 sowie einen Dichtrand 4, mit welchem die Filterkartusche 1 im bestimmungsgemäßen Gebrauch in einem Trichter (nicht dargestellt) eines Wasserfiltersystems sitzt. Der Dichtrand 4 kann beispielsweise mit dem Oberteil 2 ein einstückiges Spritzgußteil bilden. Es ist aber auch möglich, einen Ring aus beispielsweise polymerem Dichtmaterial auf das Gehäuse der Filterkartusche 1 aufzubringen.

Die Filterkartusche 1 weist in diesem Ausführungsbeispiel insgesamt vier Einlauföffnungen 5 auf, über die Wasser in die Filterkartusche 1 strömt. Weiter ist oberhalb der Einlauföffnungen 5 eine Entlüftungsöffnung 6 vorgesehen, aus welcher aufsteigende Gase austreten können, wie im Folgenden noch ausführlicher dargestellt wird.

Oberhalb der Entlüftungsöffnung 6, also oberhalb des oberen Randes der Entlüftungsöffnung ist das Oberteil 2 geschlossen, so dass dieses eine Art Glocke bildet und oberhalb der Entlüftungsöffnung 6 keine Gasblasen austreten können. In diesem Ausführungsbeispiel weist das Oberteil 2 noch Versteifungsrippen 8 auf, auf welche gegebenenfalls aber auch verzichtet werden kann.

Das Unterteil 3 der Filterkartusche 1 ist mit einer angeschrägten Nut 9 versehen, welche mit Öffnungen (in dieser Ansicht nicht zu sehen) versehen ist und welche ebenfalls der besseren Entlüftung dient. Gleichzeitig kann beispielsweise ein in einem Trichter vorhandener Steg (nicht dargestellt) in die Nut 9 eingreifen und so eine definierte Position der Filterkartusche 1 sicherstellen.

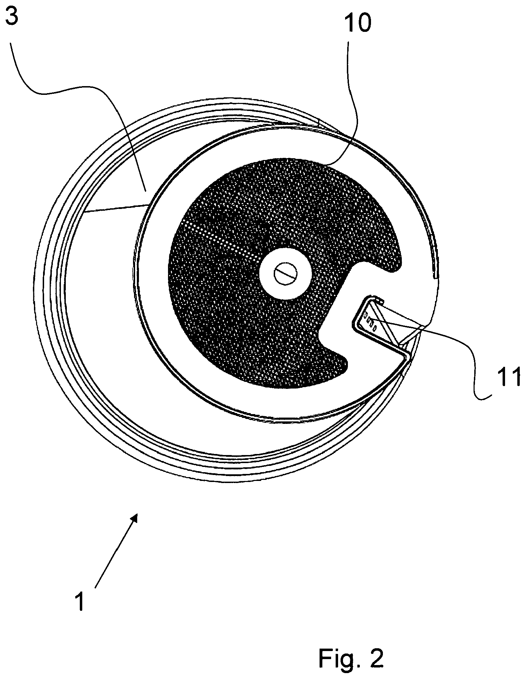

Fig. 2 zeigt eine weitere perspektivische Ansicht der in Fig. 1 dargestellten Kartusche, in welcher die Filterkartusche 1 von unten zu sehen ist.

Das becherförmige Unterteil 3 der Filterkartusche 1 ist mit einer Auslauföffnung 10 in Form eines Netzes oder siebartigen Gebildes versehen, durch welches das Wasser aus der Filterkartusche austritt. Zu erkennen sind ferner die weiteren Entlüftungsöffnungen 11 in der im Unterteil 3 angeordneten Nut.

Die Filterstruktur der Auslauföffnung 10 dient dem Rückhalten des Filtergranulats, mit welchem die Kartusche gefüllt ist.

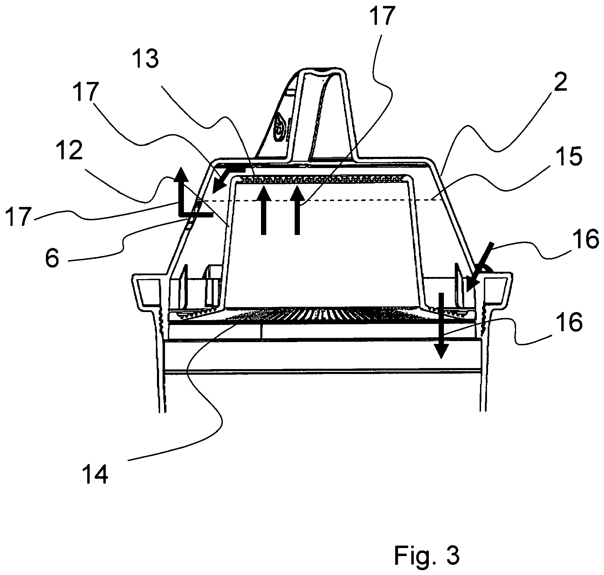

Fig. 3 zeigt eine Schnittansicht des Oberteils 2 der Filterkartusche 1 anhand welcher die Funktion der erfindungsgemäßen Filterkartusche 1 näher erläutert werden soll.

Das Innere des Oberteils 2 der Filterkartusche 1 umfaßt einen Einsatz 12, welcher in diesem Ausführungsbeispiel röhren- beziehungsweise kegelstumpfförmig ausgebildet ist. Die Mantelfläche des Einsatzes 12 ist geschlossen ausgebildet, so dass dieser eine Röhre bildet.

Zum Rückhalten des Filtergranulats (nicht dargestellt) ist der Einsatz im oberen Bereich mit einer Filterstruktur 13 verschlossen und weist im unteren Bereich eine weitere Filterstruktur 14 auf. So ist der gesamte Querschnitt der Filterkartusche durch eine Filterstruktur verschlossen, wodurch verhindert wird, dass Filtergranulat nach Außen tritt.

Bei bestimmungsgemäßem Betrieb der Filterkartusche 1 tritt zu filterndes Wasser über randseitige Einlauföffnungen in die Filterkartusche 1 ein und läuft über die Filterstruktur im Kragen 14 in das becherförmige Unterteil der Kartusche. Der Weg des zur filternden Wassers ist auf der rechten Seite dieser Darstellung durch die Pfeile 16 gekennzeichnet.

Der Kragen 14 ist angeschrägt, so dass eventuell sich im Bereich des Kragens 14 bildende Gasblasen in den darüber liegenden röhrenförmigen Abschnitt des Einsatzes 12 aufsteigen.

Da das Oberteil 2 oberhalb der Entlüftungsöffnung 6 geschlossen ist, kann das Wasser in dem Trichter, in welchem die Filterkartusche eingesetzt ist (nicht dargestellt) keinen höheren Füllstand erreichen, als durch die gestrichelte Linie 15 wiedergegeben, welche am oberen Ende der Entlüftungsöffnung 6 endet.

Der Weg eventuell aufsteigender Gasblasen wird im linken Bereich dieser Darstellung durch die Pfeile 17 symbolisiert.

Zunächst steigen Gasblasen in der Filterkartusche auf und treten innerhalb des röhrenförmigen Abschnitts des Einsatzes 12 an der Wasseroberfläche aus.

Sodann können die Gasblasen durch die obere Filterstruktur 13 hindurchtreten, ohne dass die Filterstruktur 13 mit dem Wasser in Kontakt ist. Das Gas strömt am Rand des Deckels der Filterkartusche nach unten und tritt sodann über die Entlüftungsöffnung 6 aus der Filterkartusche 1 aus.

Die Entlüftungsöffnung 6, welche wiederum mit dem Wasser in Kontakt stehen kann, ist nicht mit einer Filterstruktur versehen, beziehungsweise kann eine wesentlich grobmaschigere Filterstruktur aufweisen, bei der es zu keiner Filmbildung kommt, da die Entlüftungsöffnung 6 nicht mit dem Filtergranulat in Kontakt kommt und somit das Filtergranulat nicht aus der Entlüftungsöffnung 6 austreten kann.

Vermutlich aufgrund vorhandener Oberflächenspannung des Wassers kann sich im Oberteil 2 auch Gas sammeln, bis dieses leicht unterhalb des oberen Endes der Entlüftungsöffnung 6 angekommen ist und dann blasenförmig aufsteigt.

Es hat sich gezeigt, dass selbst die Bildung eines geschlossenen Films aus Wasser auf der oberen Filterstruktur 13, beispielsweise dadurch dass das Wasserfiltersystem vom Benutzer geschüttelt wurde, nicht zu einem wesentlich verschlechterten Durchfluß führt.

Dies ist vermutlich darauf zurückzuführen, dass bei einem geschlossenen Wasserfilm entlang der Filterstruktur 13 sich Gasblasen unterhalb der Filterstruktur 13 solange sammeln, bis der geschlossene Film zerstört wird. Dies scheint darauf zurück zu führen sein, dass der Druck innerhalb des röhrenförmigen Abschnitts des Einsatzes 12 bei einer vollständig benetzten Filterstruktur 13 dem Druck der Wassersäule entspricht, welche über der Filterkartusche steht. So wird quasi der Druck der Wassersäule genutzt, um einen geschlossenen Wasserfilm auf der Filterstruktur 13 aufzubrechen.

Durch das dargestellte System bildet der Einsatz 12 zusammen mit dem Oberteil 2 einen Luftsiphon für austretende Gasblasen.

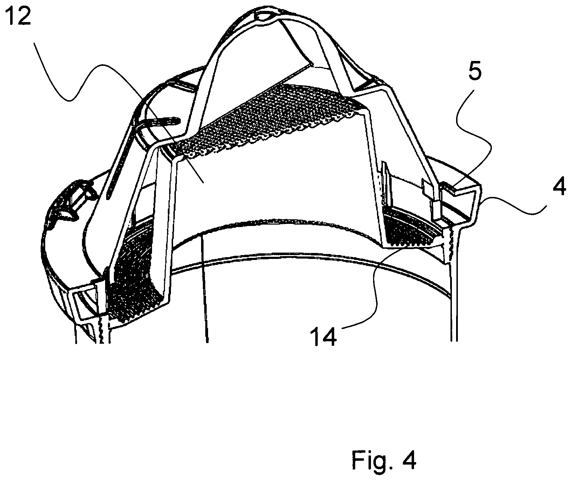

Bezugnehmend auf Fig. 4, welche eine perspektivische aufgeschnittene Ansicht des Oberteils einer Filterkartusche zeigt, sollen weitere Details erläutert werden.

Zu erkennen ist der abschnittsweise röhrenförmig ausgebildete Einsatz 12 und der randseitige Dichtrand 4 der Filterkartusche 1. Oberhalb und in der Nähe des Dichtrandes 4 ist eine Einlauföffnung 5 zu erkennen, durch welche das Wasser oberhalb des Kragens 14 in die Filterkartusche 1 läuft, sodann den Kragen 14 passiert und vom Filtergranulat (nicht dargestellt) gefiltert wird.

Durch die Erfindung wird eine Filterkartusche mit verbesserter Entlüftung bereit gestellt.

### Bezugszeichenliste

- 1: - Filterkartusche
- 2: - Oberteil
- 3: - Unterteil
- 4: - Dichtrand
- 5: - Einlauföffnung
- 6: - Entlüftungsöffnung
- 7: - Griff
- 8: - Versteifungsrippe
- 9: - Nut
- 10: - Auslauföffnung
- 11: - weitere Entlüftungsöffnung
- 12: - Einsatz
- 13: - Filterstruktur
- 14: - Kragen
- 15: - gestrichelte Linie
- 16: - Pfeil
- 17: - Pfeil

## Patentansprüche

1. Filterkartusche (1), insbesondere für ein schwerkraftbetriebenes System zur Filterung von Trinkwasser, umfassend ein Oberteil (2) mit zumindest einer Einlauföffnung (5) und ein Unterteil (3) mit zumindest einer Auslauföffnung (10) und welche mit einem Filtergranulat befüllt ist,
**dadurch gekennzeichnet, dass** das Oberteil (2) zumindest eine Entlüftungsöffnung (6) aufweist, welche unterhalb einer geschlossenen Mantelfläche eines in der Filterkartusche (1) angeordneten Einsatzes (12) angeordnet ist, wobei der Einsatz (12) aus einem röhrenförmigen Abschnitt besteht, welcher oben mit einer Filterstruktur (13) zur Rückhaltung des Filtergranulats verschlossen ist, und wobei das Oberteil (2) oberhalb der zumindest einen Entlüftungsöffnung (6) geschlossen ist.

2. Filterkartusche nach dem vorstehenden Anspruch,
**dadurch gekennzeichnet, dass** die Filterstruktur (13) als Gitter oder textiles Flächengebilde ausgebildet ist.

3. Filterkartusche nach einem der vorstehenden Ansprüche, **dadurch gekennzeichnet, dass** der Einsatz (12) kegelstumpf- oder zylinderförmig ausgebildet ist und auf der der Filterstruktur (13) gegenüber liegenden Seite einen Kragen (14) mit einer weiteren Filterstruktur aufweist.

4. Filterkartusche nach dem vorstehenden Anspruch,
**dadurch gekennzeichnet, dass** die zumindest eine Einlauföffnung (5) oberhalb der weiteren Filterstruktur angeordnet ist.

5. Filterkartusche nach einem der beiden vorstehenden Ansprüche, **dadurch gekennzeichnet, dass** der Kragen (14) kegelförmig ausgebildet ist.

6. Filterkartusche nach einem der vorstehenden Ansprüche, **dadurch gekennzeichnet, dass**, jeweils gemessen von einem oberen Ende der Entlüftungsöffnung (6) bis zu einem unteren Ende der Einlauföffnung (5), die zumindest eine Einlauföffnung (5) zumindest 0,3, vorzugsweise zumindest 1 cm unterhalb der Entlüftungsöffnung (6) liegt.

7. Filterkartusche nach einem der vorstehenden Ansprüche, **dadurch gekennzeichnet, dass** die zumindest eine Entlüftungsöffnung (6) zumindest 0,2, vorzugsweise zumindest 0,5 cm unterhalb des oberen Endes der geschlossenen Mantelfläche des Einsatzes (12) und/oder zumindest 0,2, vorzugsweise zumindest 0,5 cm oberhalb des unteren Endes der geschlossenen Mantelfläche des Einsatzes (12) liegt.

8. Filterkartusche nach einem der vorstehenden Ansprüche, **dadurch gekennzeichnet, dass** die Filterkartusche eine Entlüftungsöffnung und zumindest zwei Einlauföffnungen (5) aufweist.

9. Filterkartusche nach einem der vorstehenden Ansprüche, **dadurch gekennzeichnet, dass** die Filterkartusche (1) mit einem Granulat gefüllt ist und die zumindest eine Auslauföffnung (10) als Filterstruktur für das Granulat ausgebildet ist.

10. Verfahren zur Filtration von Wasser mittels einer Filterkartusche (1) nach einem der vorstehenden Ansprüche, wobei das Wasser durch zumindest eine Einlauföffnung (5) in eine in einem Trichter sitzende Filterkartusche (1) einläuft, ein Filtergranulat durchläuft und an einem unteren Ende der Filterkartusche (1) in einen Auffangbehälter läuft, **dadurch gekennzeichnet, dass** austretende Gase, insbesondere Luft, über einen Einsatz (12) mit einer geschlossenen Mantelfläche durch eine Filterstruktur (13) in ein Oberteil (2) der Kartusche geleitet werden und über zumindest eine unter der Filterstruktur (13) angeordnete Entlüftungsöffnung (6) aus der Filterkartusche (1) austreten.

## Claims

1. A filter cartridge (1), in particular for a gravity-driven system for filtering drinking water, comprising an upper part (2) comprising at least one inlet opening (5) and a lower part (3) comprising at least one outlet opening (10), and which is filled with a filter granulate,
**characterized in that** the upper part (2) has at least one ventilation opening (6), which is arranged below a closed jacket surface of an insert (12) arranged in the filter cartridge (1), wherein the insert (12) consists of a tubular section, which is closed on the top by means of a filter structure (13) for retaining the filter granulate, and wherein the upper part (2) is closed above the at least one ventilation opening (6).

2. The filter cartridge according to the preceding claim,
**characterized in that** the filter structure (13) is formed as lattice or textile fabric.

3. The filter cartridge according to any one of the preceding claims, **characterized in that** the insert (12) is formed in the shape of a truncated cone or cylindrical and has a collar (14) comprising a further filter structure on the side located opposite the filter structure (13).

4. The filter cartridge according to the preceding claim,
**characterized in that** the at least one inlet opening (5) is arranged above the further filter structure.

5. The filter cartridge according to any one of the two preceding claims, **characterized in that** the collar (14) is formed conically.

6. The filter cartridge according to any one of the preceding claims, **characterized in that**, in each case measured from an upper end of the ventilation opening (6) to a lower end of the inlet opening (5), the at least one inlet opening (5) lies at least 0.3, preferably at least 1 cm, below the ventilation opening (6).

7. The filter cartridge according to any one of the preceding claims, **characterized in that** the at least one ventilation opening (6) lies at least 0.2, preferably at least 0.5 cm, below the upper end of the closed jacket surface of the insert (12) and/or at least 0.2, preferably at least 0.5 cm, above the lower end of the closed jacket surface of the insert (12).

8. The filter cartridge according to any one of the preceding claims, **characterized in that** the filter cartridge has a ventilation opening and at least two inlet openings (5).

9. The filter cartridge according to any one of the preceding claims, **characterized in that** the filter cartridge (1) is filled with a granulate and the at least one outlet opening (10) is formed as filter structure for the granulate.

10. A method for the filtration of water by means of a filter cartridge (1) according to any one of the preceding claims, wherein the water runs through at least one inlet opening (5) into a filter cartridge (1) sitting in a funnel, passes through a filter granulate, and runs into a collection container on a lower end of the filter cartridge (1), **characterized in that** escaping gases, in particular air, are guided via an insert (12) comprising a closed jacket surface through a filter structure (13) into an upper part (2) of the cartridge, and escape from the filter cartridge (1) via at least one ventilation opening (6) arranged below the filter structure (13).

## Revendications

1. Cartouche filtrante (1), en particulier pour un système fonctionnant par gravité pour la filtration de l'eau potable, comprenant une partie supérieure (2) avec au moins un orifice d'entrée (5) et une partie inférieure (3) avec au moins un orifice de sortie (10) et qui est remplie de granulés de filtration,
**caractérisée en ce que** la partie supérieure (2) présente au moins un orifice d'aération (6) qui est disposé en dessous d'une surface enveloppante fermée d'une garniture (12) disposée dans la cartouche filtrante (1), la garniture (12) se composant d'une section tubulaire qui est obturée en haut avec une structure de filtre (13) pour la rétention des granulés de filtration et la partie supérieure (2) au-dessus au moins d'un orifice d'aération (6) étant fermée.

2. Cartouche filtrante conformément à la revendication précédente,
**caractérisée en ce que** la structure de filtre (13) est conçue comme grille ou comme structure superficielle textile.

3. Cartouche filtrante conformément à l'une des revendications précédentes, **caractérisée en ce que** la garniture (12) est conçue en forme conique ou cylindrique et présente, sur le côté opposé à la structure de filtre (13), une collerette (14) avec une deuxième structure de filtre.

4. Cartouche filtrante conformément à la revendication précédente,
**caractérisée en ce qu'**au moins un orifice d'entrée (5) est disposé au-dessus de la deuxième structure de filtre.

5. Cartouche filtrante conformément à l'une des deux revendications précédentes, **caractérisée en ce que** la collerette (14) est conçue en forme conique.

6. Cartouche filtrante conformément à l'une des revendications précédentes, **caractérisée en ce que**, compte tenu d'une mesure réalisée respectivement depuis une extrémité supérieure de l'orifice d'aération (6) jusqu'à une extrémité inférieure de l'orifice d'entrée (5), au moins un orifice d'entrée (5) se situe au moins à 0,3, de préférence au moins à 1 cm en dessous de l'orifice d'aération (6).

7. Cartouche filtrante conformément à l'une des revendications précédentes, **caractérisée en ce qu'**au moins un orifice d'aération (6) se situe au moins à 0,2, de préférence au moins à 0,5 cm en dessous de l'extrémité supérieure de la surface enveloppante fermée de la garniture (12) et/ou au moins à 0,2, de préférence au moins à 0,5 cm au-dessus de l'extrémité inférieure de la surface enveloppante fermée de la garniture (12) .

8. Cartouche filtrante conformément à l'une des revendications précédentes, **caractérisée en ce que** la cartouche filtrante présente un orifice d'aération et au moins deux orifices d'entrée (5).

9. Cartouche filtrante conformément à l'une des revendications précédentes, **caractérisée en ce que** la cartouche filtrante (1) est remplie de granulés et qu'au moins un orifice de sortie (10) est conçu comme structure de filtre pour les granulés.

10. Procédé pour la filtration de l'eau au moyen d'une cartouche filtrante (1) conformément à l'une des revendications précédentes, l'eau entrant par au moins un orifice d'entrée (5) dans une cartouche filtrante (1) reposant dans un entonnoir, traversant des granulés de filtration et coulant dans un bac collecteur à une extrémité inférieure de la cartouche filtrante (1), **caractérisé en ce que** les échappements de gaz, en particulier de l'air, sont acheminés par une garniture (12) avec une surface enveloppante fermée par une structure de filtre (13) dans une partie supérieure (2) de la cartouche et sortent de la cartouche filtrante (1) par au moins un orifice d'aération (6) disposé sous la structure de filtre (13).
